# EUROPÄISCHE PATENTSCHRIFT

(11) **EP 1 759 621 B1**
(45) Veröffentlichungstag und Bekanntmachung des Hinweises auf die Patenterteilung: **29.04.2009**
(21) Anmeldenummer: 06119551.7
(22) Anmeldetag: 25.08.2006
(51) Int. Cl.: A47L 11/14, A47L 11/00, A47L 9/00

(54) **Reinigungsvorrichtung mit Brennstoffzellenantrieb**
Cleaning device with fuel cell drive
Dispositif de nettoyage avec système d'entraînement à piles à combustibles

(30) Priorität: 01.09.2005 DE 102005041598
(43) Veröffentlichungstag der Anmeldung: 07.03.2007
(73) Patentinhaber: Paul-Geissler GmbH, 80807 München (DE)
(72) Erfinder: Geißler, Paul, 80807 München (DE)
(74) Vertreter: Barth, Stephan Manuel

(56) Entgegenhaltungen:
- EP-A- 1 360 922
- WO-A-20/04073477
- WO-A-20/04082899
- CH-A- 170 673
- JP-A- 2001 275 908

## Beschreibung

Die vorliegende Erfindung betrifft eine Reinigungsvorrichtung, insbesondere zum Reinigen von textilen Oberflächen, wie z. B. Teppichen, oder glatten Oberflächen aus Kunststoffen, Metall, Holz oder Stein an Böden, Wänden oder Decken von Gebäuden.

Die DE 101 13 789 A1 beschreibt eine Reinigungsvorrichtung mit einem rotierenden Reinigungskörper zum Reinigen von Oberflächen, der durch eine Brennstoffzelleneinrichtung mit elektrischer Energie versorgt wird.

Die DE 699 17 325 beschreibt ein Fußbodenreinigungsgerät mit einem Schaumverteiler, in welchem ein Fluid auf eine rotierende Bürste aufgebracht wird.

Die JP 2001 275908 A beschreibt eine Reinigungsvorrichtung mit einer sich drehenden Bürste. Eine Brennstoffzelle versorgt die Reinigungseinrichtung mit elektrischer Energie. Eine Kühlung der Brennstoffzelle erfolgt durch einen geschlossenen Kühlkreislauf, aus dem mittels einer Pumpe Kühlflüssigkeit entnommen und auf einen zu reinigenden Boden gesprüht werden kann.

Solche Reinigungsvorrichtungen sollen nicht nur einen Boden gut reinigen, sondern auch einfach und zuverlässig bedienbar sein. Ein wesentlicher Aspekt hierbei ist, dass die Reinigungsvorrichtungen unabhängig von einem externen Stromnetz betreibbar sein sollen. Dies erspart die Mühsal mit verlegten Kabeln zu Steckdosen bzw. macht erst die Verwendung einer Reinigungsvorrichtung möglich, wenn keine entsprechenden Steckdosen in Gebäuden oder auf Freiflächen zur Verfügung stehen. Daher werden leistungsstarke Batterien verwendet, um den Strom für die Motoren und die Steuerung der Reinigungseinrichtung bereitzustellen. Die maximale in den Batterien speicherbare Energiemenge ist jedoch begrenzt. Dies macht ein regelmäßiges Aufladen der Batterien notwendig.

Während dem Aufladen ist eine Verwendung der Reinigungsvorrichtung nicht möglich. Somit ergeben sich Zwangspausen, welche eine Dauerbenutzung der Reinigungsvorrichtung unmöglich machen. Zudem sind Batterien, welche die benötigten Leistungsabgaben von einem KW über mehrere Stunden bereitstellen, sehr groß und damit auch schwer. Daher tragen diese in nicht unerheblichem Maß zum Gewicht bei, welches die Handhabbarkeit der Reinigungsvorrichtungen einschränkt.

Es ist eine Aufgabe der vorliegenden Erfindung, eine verbesserte Vorrichtung zum Reinigen einer Oberfläche bereitzustellen, welche insbesondere unabhängig von einer externen elektrischen Netzversorgung betrieben werden kann und welche insbesondere auch einfach handhabbar ist.

Die erfindungsgemäße Vorrichtung weist einen rotierenden Reinigungskörper und eine Brennstoffzelle auf. Der oder die Reinigungskörper sind zum Reinigen einer Oberfläche vorgesehen. Die Brennstoffzelle versorgt die Vorrichtung mit elektrischer Energie.

Eine Idee der vorliegenden Erfindung besteht darin, eine Brennstoffzelle zu verwenden. Diese kann mit Gas oder Flüssigkeiten versorgt werden. Beides kann in kurzer Zeit nachgefüllt werden, so dass ein nahezu ununterbrochener Betrieb der Reinigungsvorrichtung möglich ist. Zudem sind Brennstoffzellen in der Regel bei gleicher Leistungsabgabe leichter und kompakter als entsprechende Batterien, wodurch die Handhabbarkeit der Reinigungsvorrichtung verbessert wird.

Weitere vorteilhafte Ausgestaltungen der erfindungsgemäßen Vorrichtung sind in den Unteransprüchen angegeben.

Die Reinigungsvorrichtungen benötigen in der Regel Reinigungsflüssigkeiten oder Dampf, um den Schmutz von Oberflächen besser anlösen zu können. Dies verbessert in der Regel deren Reinigungswirkung. Deshalb müssen Flüssigkeitsbehälter mit Flüssigkeiten und unter Umständen Verdampfer mitgeführt werden, wodurch das Gesamtgewicht der Reinigungsvorrichtung sehr groß ist.

Eine besonders bevorzugte Ausgestaltung sieht vor eine Verteilereinrichtung bereitzustellen. Die Verteilereinrichtung richtet Abgase und/oder Abfallflüssigkeiten der Brennstoffzelle auf den mindestens einen Reinigungskörper und/oder die Oberfläche.

Dadurch kann die Menge an mitgeführter Flüssigkeit zum Reinigen der Oberfläche ebenfalls reduziert werden. Hierzu werden die Abgase und/oder Abfallflüssigkeiten der Brennstoffzelle verwendet und durch die Verteilereinrichtung auf die Oberfläche aufgebracht bzw. auf den Reinigungskörper aufgebracht.

Eine Ausgestaltung sieht vor, die Verteilereinrichtung mit mindestens einer Düse mit einem Düsenauslass auszustatten, welcher auf den mindestens einen Reinigungskörper und/oder die Oberfläche zeigt. Die Düse ermöglicht, die Abfallflüssigkeit oder die Abgase mit hohem Druck aufzubringen, welches vorteilhaft zum Reinigen sein kann. In einer weiteren Ausgestaltung kann dazu in der Verteilereinrichtung eine Pumpe integriert sein. Die Pumpe kann z. B. eine Membranpumpe sein, welche die geringen Flüssigkeiten sehr effizient und mit geringem Energieaufwand transportiert.

Eine Ausgestaltung sieht vor, eine Kondensoreinrichtung zum Kondensieren der Abgase der Brennstoffzelle in der Verteilereinrichtung anzuordnen. Vorteilhafterweise wird die Kondensoreinrichtung unmittelbar nach der Brennstoffzelle angeordnet. Hierbei kann einerseits die Wärmeenergie aus den Abgasen gewonnen werden und andererseits werden die zum Teil entstehenden Abgase in eine leichter zu handhabende Flüssigkeit umgewandelt.

Gemäß einer Weiterbildung ist der rotierende Reinigungskörper über eine hohle Welle mit einem Maschinenkörper mechanisch gekoppelt, die Brennstoffzelle ist Bestandteil des Maschinenkörpers und die Verteilereinrichtung ist zumindest teilweise in der hohlen Welle angeordnet. Die Anordnung der Verteilereinrichtung in der hohlen Welle ermöglicht eine starre Verteilereinrichtung zu verwenden, welche nicht mit dem rotierenden Reinigungskörper mitbewegt werden muss.

In einer Weiterbildung ist ein Endstück der Verteilereinrichtung in dem Reinigungskörper eingebettet, welches Öffnungen zum Auslassen der Abgase und/oder der Abfallflüssigkeiten aufweist. Vorzugsweise sind die Öffnungen gleichmäßig entlang oder oberhalb einer Fläche des Reinigungskörpers angeordnet. Auf diese Weise wird eine sehr gleichmäßige Benetzung des Reinigungskörpers ermöglicht.

Nach einer Ausgestaltung ist ein Vorratsbehältnis für einen Brennstoff an dem Maschinenkörper angeordnet und über eine Zuleitung mit der Brennstoffzelle verbunden. Das Vorratsbehältnis kann eine Gasflasche mit komprimiertem Gas, z. B. Wasserstoffgas, oder ein Flüssigkeitsbehälter für z. B. Methanol sein. Es kann eine Arretierungsvorrichtung zum lösbaren Einsetzen des Vorratsbehältnisses vorgesehen sein. Dies ermöglicht insbesondere einfach Gasflaschen auszutauschen.

Gemäß einer besonders bevorzugten Weiterbildung ist eine wärmeleitende Brücke vorgesehen, welche den rotierenden Reinigungskörper mit der Brennstoffzelle verbindet. Auf diese Weise wird der rotierende Reinigungskörper durch die Brennstoffzelle mitgewärmt. Bei der Verwendung von Reinigungsmitteln auf Basis von Enzymen wird die Reinigungswirkung dadurch optimiert, dass der Reinigungskörper eine Temperatur zwischen 30 bis 40°C, je nach Enzym, aufweist. Hierzu kann die Brennstoffzelle einen wesentlichen Beitrag der benötigten Wärmemenge leisten. Somit können zusätzliche Wärmeelemente kleiner ausgelegt oder sogar ganz auf sie verzichtet werden. In einer Weiterbildung ist eine wärmeisolierende Ummantelung vorgesehen, welche die Brennstoffzelle und die wärmeleitende Brücke umgibt. Dadurch wird eine Wärmeabgabe der Brennstoffzelle hauptsächlich über die wärmeleitende Brücke erfolgen. Verluste der Wärme an die Umgebung werden verringert. Entsprechend der Isolationsfähigkeit wird mindestens die Hälfte der Wärmemenge über die wärmeleitende Brücke abgeführt.

In einer Ausgestaltung der erfindungsgemäßen Vorrichtung ist eine erste Achse vorgesehen ist, welche senkrecht zu der zu reinigenden Oberfläche angeordnet ist und um welche sich mindestens einer der rotierenden Reinigungskörper dreht. Zudem oder stattdessen ist eine zweite Achse vorgesehen, welche parallel zu der zu reinigenden Oberfläche angeordnet ist und um welche sich mindestens einer der rotierenden Reinigungskörper dreht.

Gemäß einer Weiterbildung ist eine Füllstandsanzeige zum Anzeigen eines Füllstandes des Brennstoffbehälters vorgesehen. Somit wird ein Benutzer der Vorrichtung frühzeitig auf einen notwendigen Wechsel oder ein benötigtes Auffüllen des Vorratsbehältnisses des Brennstoffes hingewiesen.

In einer weiteren Weiterbildung ist die Brennstoffzelle und/oder das Verteilungssystem von dem Maschinenkörper bzw. dem rotierenden Reinigungskörper lösbar angeordnet. Diese modulartige Anordnung ermöglicht bestehende Systeme aufzurüsten bzw. defekte Systeme einfach und schnell zu reparieren.

Ausführungsbeispiele der Erfindung sowie vorteilhafte Weiterbildungen sind in den Figuren der Zeichnungen schematisch dargestellt und in der nachfolgenden Beschreibung näher erläutert.

In den Figuren zeigen:
- Figur 1: eine Querschnittsansicht einer Ausführungsform der erfindungsgemäßen Vorrichtung zum Reinigen,
- Figur 2: ein Blockdiagramm der elektrischen Energieversorgung der Ausführungsform von Figur 1,
- Figur 3: eine Detailansicht eines Anzeigen-Panels der Ausführungsform nach Figur 1,
- Figur 4: einen Querschnitt durch eine zweite Ausführungsform der erfindungsgemäßen Vorrichtung,
- Figur 5: einen Querschnitt durch eine dritte Ausführungsform der erfindungsgemäßen Vorrichtung,
- Figur 6: ein Blockdiagramm eines Verteilungssystems gemäß einer weiteren Ausführungsformen der erfindungsgemäßen Vorrichtung,
- Figur 7: einen Querschnitt durch eine weitere Ausführungsform der erfindungsgemäßen Vorrichtung.

In den Figuren bezeichnen ähnliche Bezugszeichen gleiche oder funktionsgleiche Komponenten, soweit nichts Gegenteiliges angegeben ist. Ähnliche Bezugszeichen stimmen in den zwei letzten Dezimalen miteinander überein, z. B. 13 und 113.

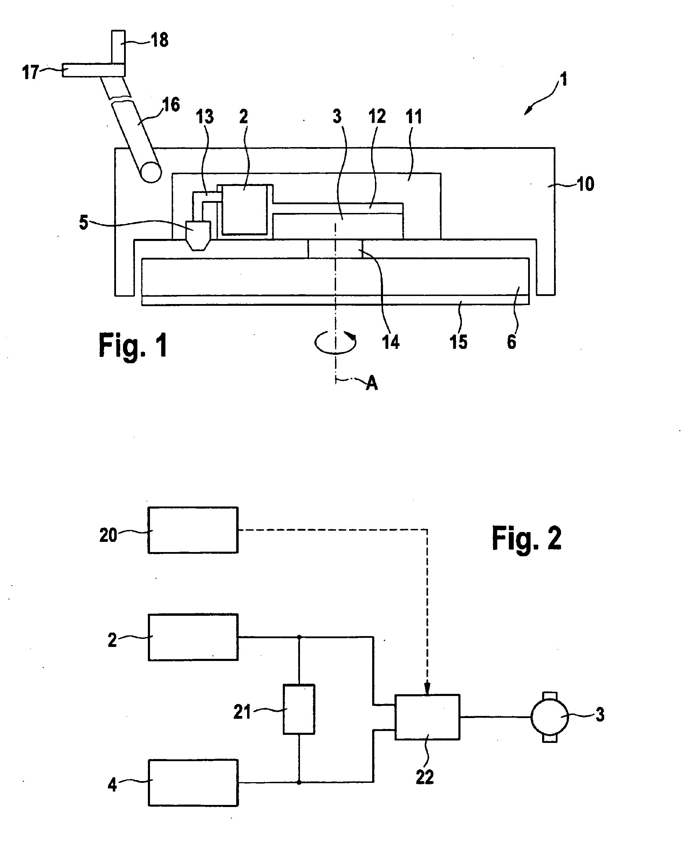

Figur 1 zeigt einen Querschnitt durch eine erste Ausführungsform der erfindungsgemäßen Vorrichtung zum Reinigen, nachfolgend als Reinigungsvorrichtung 1 bezeichnet. Ein Drehteller 6 ist über eine Welle 14 mit einem Elektromotor 3 verbunden. Der Drehteller 6 kann lösbar oder starr mit der Welle 14 verbunden sein. Die elektrische Versorgung des Elektromotors 3 erfolgt durch eine Brennstoffzelleneinrichtung 2.

Die Brennstoffzelleneinrichtung 2 beinhaltet vorzugsweise eine Niedertemperatur-Brennstoffzelle, welche typischerweise bei 80 bis 100°C betrieben wird. Hierbei kann als primärer Brennstoff Methanol oder eine andere alkoholhaltige Flüssigkeit verwendet werden. Dazu weist die Brennstoffzelleneinrichtung 2 ferner einen Reformer auf, welcher den Methanol zuerst in Wasserstoff umwandelt. Dabei entstehen etwa 10 % Wasserstoff und 20 % Kohlendioxid und weitere Nebenprodukte in geringen Restmengen. Der gebildete Wasserstoff wird dann der Brennstoffzelle zugeführt, welche auf Basis einer Proton-Austauschmembran Strom erzeugt. Dabei entsteht als Abfallprodukt Wasser aus dem verwendeten Wasserstoff und dem Luftsauerstoff. Eine Brennstoffzelleneinrichtung 2 kann auch ohne den Reformer auskommen, wenn der Wasserstoff unmittelbar in gasförmiger oder flüssiger Form bereitgestellt wird. Ein weiterer Brennstoffzellentyp, welcher unmittelbar Methanol oder andere alkoholhaltigen Flüssigkeiten zur Stromgewinnung verwendet, kann ebenso verwendet werden.

Wie bereits angedeutet, entsteht bei der Herstellung der elektrischen Energie durch die Brennstoffzelleneinrichtung 2 Wasser oder andere Abfallprodukte, welches in flüssiger und/oder gasförmiger Form entstehen. In der Regel weisen Brennstoffzellen einen Abfluss auf, an welchem die Verteilereinrichtung 13 angeschlossen werden kann. Das aufgesammelte Wasser wird einer Düse 5 zugeführt. Ein Düsenauslass der Düse 5 ist derart ausgerichtet und angeordnet, dass das Wasser auf die zu reinigende Oberfläche oder die Reinigungsmembran 15 gesprüht wird. In der in Figur 1 dargestellten Ausführungsform ist die Düse 5 oberhalb des sich drehenden Drehtellers 6 angeordnet. In diesem können vertikal verlaufende Öffnungen angeordnet sein, durch welche die Düse 5 das Wasser auf den Boden bzw. das Reinigungskissen 15 spritzt.

Vorzugsweise ist die Brennstoffzelleneinrichtung 2 räumlich nahe an der Welle 14 und/oder dem Elektromotor 3 angeordnet. Dies verkürzt einerseits die benötigten elektrischen Verdrahtungen. Andererseits wird Abwärme der Brennstoffzelleneinrichtung 2 über die Welle 14 und/oder den Elektromotor 3 an den Drehteller 6 weitergeleitet. Der Elektromotor 3 und/oder die Welle 14 fungieren in diesem Fall als wärmeleitende Brücke. Dies ist insbesondere dann von Vorteil, wenn Reinigungsmittel verwendet werden, welche ihre Reinigungswirkung erst ab Temperaturen von 30°C voll entfalten. Hierzu zählen insbesondere Reinigungsmittel auf der Basis von Enzymen. Die Wärmeübertragung von der Brennstoffzelleneinrichtung 2 auf die Welle 14 bzw. den Elektromotor 3 kann durch eine zusätzliche Wärmebrücke 12 erhöht werden. Vorteilhafterweise umgibt die Wärmebrücke 12 nahezu vollständig die Brennstoffzelleneinrichtung 2 und ist großflächig an dem Elektromotor 3 und/oder der Welle 14 angeordnet.

Die Wärmeübertragung von der Brennstoffzelleneinrichtung 2 an den Elektromotor 3 und/oder die Welle 14 kann durch eine thermisch isolierende Ummantelung 11 verbessert werden. Dazu umgibt die thermisch isolierende Ummantelung 11 die Brennstoffzelleneinrichtung 2 und den Elektromotor 3.

Die Versorgung der Brennstoffzelle mittels Brennstoff erfolgt durch eine entsprechende Zuleitung, welche an einem Brennstoffbehältnis angeschlossen ist. Das Brennstoffbehältnis kann einerseits ein Flüssigkeitsbehälter zur Aufnahme der alkoholhaltigen Flüssigkeit bzw. des Methanols sein. Für Brennstoffzelleneinrichtungen 2, welche auf reiner Wasserstoffbasis arbeiten, kann das Vorratsbehältnis eine Wasserstoffgasflasche sein. Vorzugsweise ist hierfür eine Halterungsvorrichtung vorgesehen, in welcher die Gasflasche lösbar angeordnet werden kann. Dies ermöglich ein einfaches und schnelles Wechseln einer leeren Gasflasche.

Zweckmäßigerweise ist der Elektromotor 3, die Brennstoffzelleneinrichtung 2 und das Vorratsbehältnis von einem Gehäuse 10 umgeben. An diesem Gehäuse kann eine Führungseinrichtung angeordnet sein, welche ein Gestänge 16, Griffe 17 und ein Anzeige-Panel 18 aufweist. In einer Ausführungsform kann das Gehäuse 10 den Drehteller nicht berührend umschließen, damit einerseits eine Verletzungsgefahr verringert wird und andererseits eine zusätzliche Wärmedämmung des Drehtellers ermöglicht wird.

In Zusammenschau mit Figur 2 ist eine mögliche Konfiguration der elektrischen Versorgung des Elektromotors 3 als Blockdiagramm dargestellt. Die primäre Energiequelle ist die Brennstoffzelleneinrichtung 2, welche über eine Verteilereinrichtung 22 mit dem Elektromotor 3 verbunden ist. Manche Brennstoffzellentypen eignen sich nicht für die Versorgung von kurzzeitig auftretenden Spitzenlasten. Um diese abzupuffern kann der Brennstoffzelleneinrichtung 2 eine Batterie 4 parallelgeschaltet werden. Die Verteilereinrichtung 22 schaltet bei entsprechender Spitzenlast die Batterie 4 zu. Zusätzlich kann Strom aus der Batterie 4 so lange bezogen werden, bis die Brennstoffzelleneinrichtung 2 ihre optimale Betriebstemperatur beim Einschalten der Reinigungsvorrichtung 1 erreicht. Eine Ladevorrichtung 21 verbindet die Batterie 4 mit der Brennstoffzelleneinrichtung 2 in Serie. Fällt der Ladezustand der Batterie 4 unter einen vorbestimmten Wert, speist die Brennstoffzelleneinrichtung 2 die Batterie 4, um sie aufzuladen. Die Verteilereinrichtung 22 kann durch eine Steuerungseinrichtung 20 gesteuert werden. Die Steuerungseinrichtung 20 kann Bedienelemente für einen Benutzer beinhalten, z. B. einen Schlüssel zum Starten bzw. Abschalten der Reinigungsvorrichtung 1.

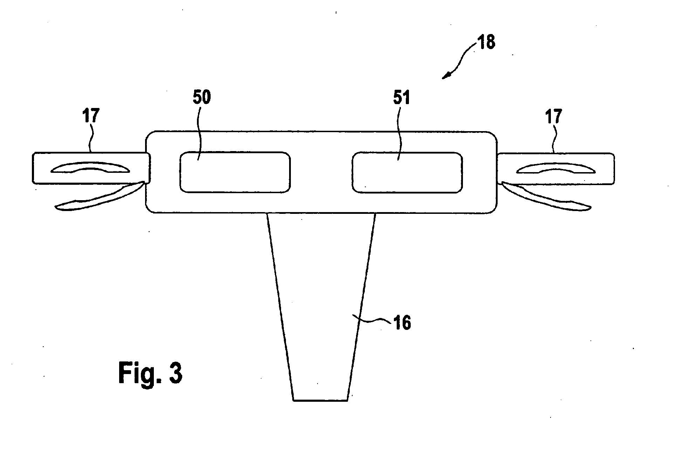

In Figur 3 ist eine schematische Aufsicht auf ein AnzeigenPanel 18 dargestellt. Dieses kann z. B. eine Füllstandsanzeige 51 aufweisen, welche den Füllstand des Vorratsbehältnisses angibt. Eine weitere Anzeige 50 kann einen allgemeinen Betriebszustand der Reinigungsvorrichtung 1 oder z. B. der Batterie 4 angeben.

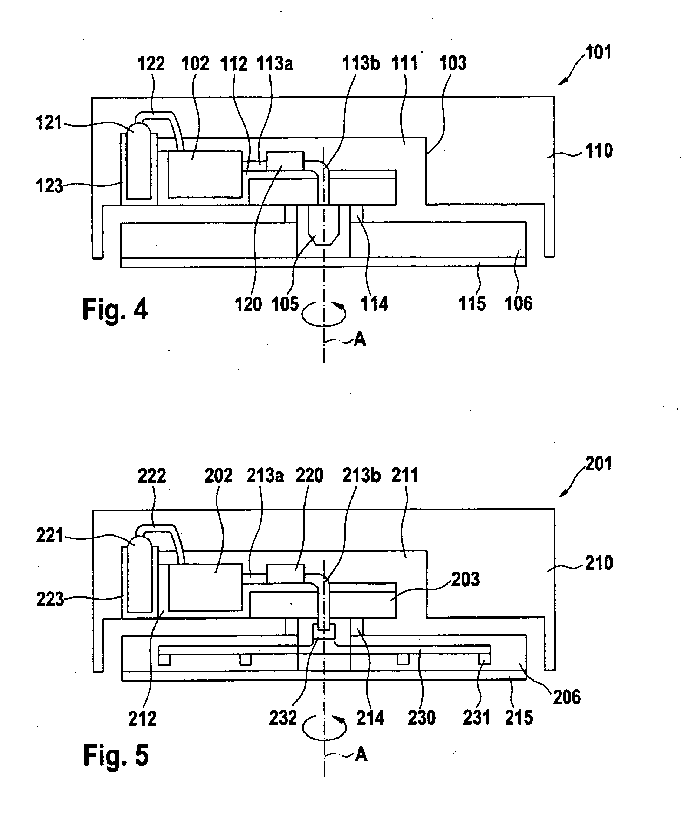

In Figur 4 ist ein Querschnitt durch eine zweite Ausführungsform der vorliegenden Erfindung dargestellt. Hierbei werden nur Merkmale beschrieben, welche sich wesentlich von der ersten beschriebenen Ausführungsform unterscheiden bzw. in Figur 1 aus Gründen der Übersichtlichkeit nicht dargestellt werden konnten. In Figur 4 ist ein Versorgungsbehältnis 121 in Form einer Gasflasche dargestellt. Diese ist über eine Versorgungsleitung 122 mit der Brennstoffzelleneinrichtung 102 verbunden. Die Halterungseinrichtung 123 für das Versorgungsbehältnis 121 ist vorzugsweise derart gestaltet, dass das Versorgungsbehältnis 121 einfach entfernt und ausgetauscht werden kann. Zwischen der Düse 105 und der Brennstoffzelleneinrichtung 102 ist eine Kondensoreinrichtung 120 angeordnet. Diese Kondensoreinrichtung dient dazu Abgase der Brennstoffzelle 102 zu verflüssigen. Auf diese Weise wird unter anderem auch der gasförmige Anteil des in der Brennstoffzelle entstehenden Wassers genutzt. Zudem wird beim Kondensieren latente Wärme frei, welche an den Drehteller 106 weitergeleitet werden kann. Dazu ist vorteilhafterweise die Kondensoreinrichtung 120 angrenzend an die Wärmebrücke 112 angeordnet.

Der Drehteller 106 kann über eine hohlförmige Welle 114 mit dem Elektromotor 103 verbunden sein. Dadurch bleibt entlang der Drehachse A ein Hohlraum frei. In diesem Hohlraum wird die Düse 105 angeordnet. Die Düse 105 kann wie dargestellt auf die textile Bespannung 115 sprühen oder auch derart gestaltet sein, dass sie seitlich in den Drehteller 106 hineinsprüht, welcher für diesen Fall hohl aufgebaut sein kann. Die textile Bespannung 115 kann in dem an den Hohlraum angrenzenden Bereich ausgespart sein, so dass die Düse unmittelbar auf die zu reinigende Oberfläche sprüht.

In Figur 5 ist eine dritte Ausführungsform der vorliegenden Erfindung im Querschnitt dargestellt. In diesem Fall ist in dem Drehteller 206 ein Endstück 230 der Verteileranordnung eingebettet. Die Verteileranordnung weist eine Mehrzahl von Öffnungen 231 auf. Durch diese Öffnungen 231 wird eine gleichmäßige Benetzung der textilen Bespannung 215 erreicht. Das Endstück 230 kann starr mit der Brennstoffzelleneinrichtung 202 verbunden sein. In diesem Fall ist das Endstück 230 frei schwebend in dem Drehteller 206 angeordnet. In einer bevorzugten Anordnung ist eine Muffe 232 vorgesehen, welche das Endstück 230 mit dem Rest der Verteilungseinrichtung 213a, 213b verbindet. Diese Muffe ist derart ausgebildet, dass sich das Endstück relativ zu dem Rest der Verteilereinrichtung 213a, 213b drehen kann. Dann kann das Endstück 230 fest in dem Drehteller 206 eingebettet werden.

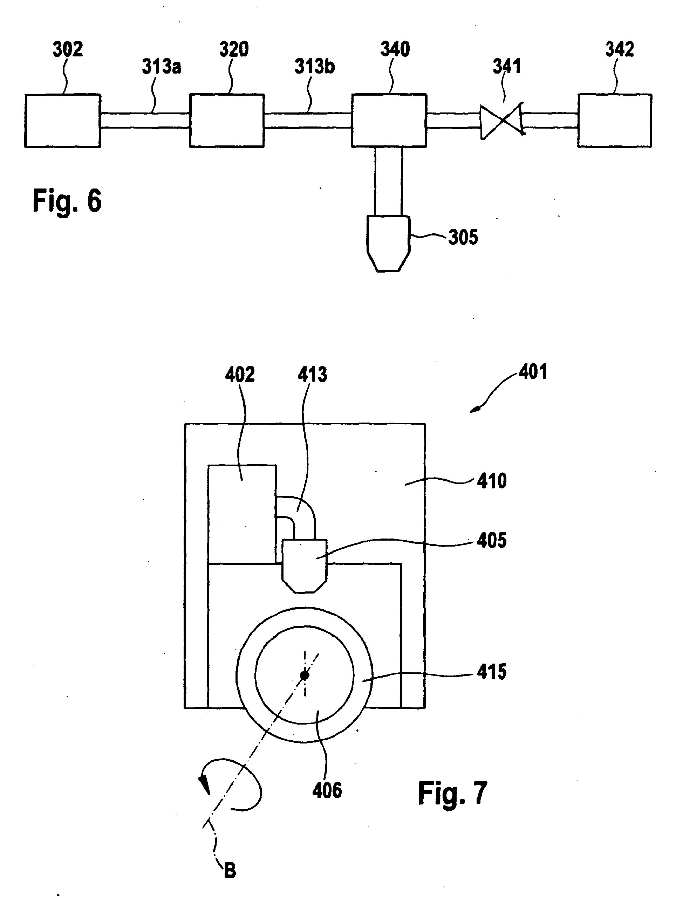

In Figur 6 ist als Blockdiagramm schematisch eine Verteilereinrichtung und die an sie angeschlossenen Einrichtungen dargestellt. Abgase und/oder Abgasflüssigkeiten werden durch die Brennstoffzelleneinrichtung 302 bereitgestellt und über ein erstes Stück der Verteilereinrichtung 313a einer Kondensoreinrichtung 320 zugeführt. Die hierin entstehenden Flüssigkeiten werden über ein zweites Teilstück der Verteilereinrichtung 313b einer Pumpeneinrichtung 340 zugeführt. Die Pumpe 340 kann z. B. eine Membranpumpe sein. Diese erhöht den Druck und führt die Flüssigkeit der Düse 305 zu. Zusätzlich kann die Pumpe Flüssigkeit von einem Behelfsbehältnis 342 ansaugen. Die entsprechende Menge kann durch ein Drosselventil 341 eingestellt werden. Anstelle der Düse 305 kann ein Endstück der Verteilereinrichtung angeordnet sein, wie es z. B. in Figur 5 dargestellt ist. Zudem ist anzumerken, dass die Kondensoreinrichtung 320 und die Pumpe 340 optional sind.

In Figur 7 ist eine vierte Ausführungsform der erfindungsgemäßen Vorrichtung dargestellt. Diese weist ebenfalls einen rotierenden Körper 406 auf, welcher mit einer Reinigungstextilie 415 bespannt ist. Eine Brennstoffzelle 402 stellt elektrische Energie und Reinigungsflüssigkeit bzw. Reinigungsgase bereit. Diese werden über eine Verteilereinrichtung 413 und z. B. eine Düse 405 auf die textile Bespannung 415 aufgebracht.

Der rotierende Körper 406 und die textile Bespannung 415 bilden zusammen den drehenden Reinigungskörper. In den vorhergehenden Ausführungsbeispielen bildeten der Drehteller 6, 106, 206 und die entsprechende textile Bespannung 15, 115, 215 den rotierenden Reinigungskörper. Die Drehachse des rotierenden Reinigungskörpers kann eine Drehachse A sein, welche senkrecht auf der zu reinigenden Oberfläche steht, oder eine Achse B sein, welche parallel zu der zu reinigenden Oberfläche verläuft.

In einer sehr vorteilhaften Ausgestaltung ist als Brennstoffzelle eine so genannte Polymer-Elektrolyt-Membran-Brennstoffzelle oder kurz eine PEM-Brennstoffzelle vorgesehen. PEM-Brennstoffzellen sind in ihrer Handhabung unkompliziert und weisen bei geringem Gewicht eine hohe Leistungsdichte auf. PEM-Brennstoffzelle benötigten statt reinem Sauerstoff nur Luftsauerstoff als Reaktionsgas. Der Wasserstoff für die Reaktion wird mit Hilfe eines Reformers erzeugt. Als Elektrolyt kommt hier vor allem eine protonenleitende Polymer-Elektrolyt-Feststoff-Membrane aus sulfoniertem Polymer zum Einsatz. Da sich die Leistungsabgabe einer PEM-Brennstoffzelle mit sehr großer Dynamik regeln lässt, eignet sie sich hervorragend für den mobilen Einsatz und für die dezentrale Energieversorgung. Ein weiterer Vorteil von PEM-Brennstoffzellen ist deren großes Potenzial für die Massenfertigung, da die Kosten eines Zellblocks einer PEM-Brennstoffzelle im Bereich von unter 100 Euro/Kilowatt liegt.

In einer zusätzlichen oder alternativen Ausgestaltung kann die Brennstoffzelle als alkalische Brennstoffzelle oder kurz als AFC-Brennstoffzelle ausgebildet sein. AFC-Brennstoffzellen sind die einzigen, heute bekannten Brennstoffzellen, die reinsten Sauerstoff und reinsten Wasserstoff zur Energieumwandlung benötigen, da schon geringste Verunreinigungen die Brennstoffzelle zerstören könnten. Wird Umgebungsluft statt des Sauerstoffs verwendet, muss das in der Umgebungsluft befindliche Kohlendioxid vor der eigentlichen Reaktion vollständig entfernt werden, um eine "Vergiftung" des Elektrolyts und damit eine Verschlechterung dessen Funktion zu vermeiden. Als Elektrolyt dient hier vor allem Kalilauge. Die AFC-Brennstoffzellen lassen sich auch in sehr kleinen Stückzahlen relativ preiswert herstellen. Ein weiterer Vorteil von AFC-Brennstoffzellen besteht in deren geringer Betriebstemperatur.

In einer zusätzlichen oder alternativen Ausgestaltung kann die Brennstoffzelle auch als Festoxid-Brennstoffzelle oder kurz als SOFC-Brennstoffzelle ausgebildet sein. Solche SOFC-Brennstoffzellen eignen sich insbesondere für mobile Anwendungen. Die SOFC-Brennstoffzelle arbeitet mit Luftsauerstoff und Wasserstoff. Als Brennstoff kann beispielsweise Erd-/Bio- oder Kohlegas verwendet werden, aus dem mittels eines Reformers der Wasserstoff erzeugt wird. Alternativ kann auch Benzin verwendet werden, das aber vor der Brennstoffzelle einem technisch einfachen Reformer und einer Entschwefelung zugeführt werden muss. Die Betriebstemperatur ist aber relativ hoch und liegt im Bereich von 800°C - 1.000°C. Diese hohe Temperatur erlaubt eine zellinterne Teilreformierung von Erdgas zu Wasserstoff. Der Aufwand für die Wasserstofferzeugung sinkt damit erheblich.

In einer zusätzlichen oder alternativen Ausgestaltung kann als Brennstoffzelle eine Direktmethanol-Brennstoffzelle oder DMFC-Brennstoffzelle verwendet werden. Solche DMFC-Brennstoffzellen eignen sich insbesondere für kleine, tragbare Anwendungen und für lokale, dezentrale Energieversorgungen. Die DMFC-Brennstoffzelle ist die einzige Brennstoffzelle, die nicht mit Wasserstoff, sondern mit Methanol als Enduktionsmedium arbeitet. Dieses Methanol lässt sich gegenüber anderen Brennstoffmedien, wie Wasserstoff, sehr viel leichter speichern. Auf einen Reformer zur Umwandlung kann hier verzichtet werden, da die Brennstoffzelle selbst Methanol in Wasserstoffprotonen, freie Elektronen und Kohlendioxid umwandelt. Durch den fehlenden Reformer ist die DMFC-Brennstoffzelle für den Einsatz in dezentralen Geräten, wie in einem Verkaufsautomat, am besten geeignet, da sie dem Ziel der möglichst einfachen Energiequelle am nächsten kommt. Als Elektrolyt wird hier eine protonenleitende Polymer-Elektrolyt-Membrane eingesetzt.

Neben den eben genannten Brennstoffzellen kommen zusätzlich oder alternativ selbstverständlich auch andere Brennstoffzellentypen, wie beispielsweise die aus der Kraftwärmekopplung bekannte PAFC-Brennstoffzelle (PAFC = phosphoric acid fuel cell) oder die Schmelzkarbonatbrennstoffzelle (MCFC-Brennstoffzelle; MCFC = molten carbonate fuel cell) in Frage.

Obwohl die vorliegende Erfindung anhand mehrerer Ausführungsbeispiele beschrieben wurde, ist es offensichtlich, dass vielfältige Änderungen vorgenommen werden können, ohne den Umfang der vorliegenden Erfindung, wie er in den Ansprüchen angegeben ist, zu verlassen.

Die textile Bespannungseinrichtung kann einstückig oder mehrstückig, aufgespannt, aufgeklebt oder anderweitig befestigt sein.

Die Anzahl der dargestellten Rotationskörper ist in keinster Weise limitierend, die Reinigungsvorrichtung kann auch zwei, drei oder mehr Reinigungskörper aufweisen. Entsprechend erhöht sich die Anzahl der Wellen.

Einzelne Merkmale, welche nur im Zusammenhang mit einer Ausführungsform beschrieben wurden, können auch im Zusammenspiel mit anderen Ausführungsformen kombiniert werden, auch wenn diese Kombinationsmöglichkeit nicht explizit angegeben ist.

### Bezugszeichenliste

| A, B | Achse |
|---|---|
| 1, 101, 201, 301, 401 | Vorrichtung zum Reinigen |
| 2, 102, 202, 302, 402 | Brennstoffzelleneinrichtung |
| 3, 103, 203, 303 | Antriebsaggregat |
| 5, 105, 305, 405 | Düse |
| 6, 106, 206, 406 | Drehteller |
| 10, 110, 210, 410 | Gehäuse |
| 11, 111, 211 | Isolationsummantelung |
| 12, 112, 212 | Wärmebrücke |
| 13, 113a, 113b, 213a, 213b, 313a, 313b, 413 | Zuleitung |
| 14, 114, 214 | Welle |
| 15, 115, 215, 415 | Reinigungskissen |
| 16 | Gestänge |
| 17 | Griff |
| 18 | Anzeigenpanel |
| 20 | Steuerungseinrichtung |
| 21 | Ladeeinrichtung |
| 22 | Stromregelungseinrichtung |
| 120, 220, 320 | Kondensoreinrichtung |
| 121, 221 | Brennstoffbehältnis |
| 123, 223 | Halterungseinrichtung |
| 122, 222 | Zuleitung |
| 230 | Endstück |
| 231 | Öffnung |
| 340 | Pumpeneinrichtung |
| 341 | Ventileinrichtung |
| 342 | Vorratsbehältnis |
| 50 | Anzeige |
| 51 | Füllstandsanzeige |

## Patentansprüche

1. Reinigungsvorrichtung,
mit mindestens einem rotierenden Reinigungskörper (6, 15; 106, 115; 206, 215; 406, 415) zum Reinigen einer Oberfläche, und
mit einer Brennstoffzelleneinrichtung (2; 102; 202; 302; 402), welche die Vorrichtung mit elektrischer Energie versorgt,
**dadurch gekennzeichnet,**
**dass** eine Verteilereinrichtung (5, 13; 113a, 113b, 105; 213a, 213b, 232, 230; 231, 313a, 313b, 305; 413, 405) vorgesehen ist, welche Abgase und/oder Abfallflüssigkeiten der Brennstoffzelleneinrichtung (2; 102; 202; 302; 402) auf den mindestens einen Reinigungskörpers (6, 15; 106, 115; 206, 215; 406, 415) und/oder die Oberfläche richtet.

2. Reinigungsvorrichtung nach Anspruch 1,
**dadurch gekennzeichnet,**
**dass** die Verteilereinrichtung (5, 13; 113a, 113b, 105; 213a, 213b, 232, 231, 230; 313a, 313b, 305; 413, 405) mindestens eine Düse (105, 305, 405) mit einem Düsenauslass aufweist, welche auf den mindestens einen Reinigungskörper (6, 15; 106, 115; 206, 215; 406, 415) und/oder die reinigende Oberfläche mit ihrem Düsenauslass zeigend ausgerichtet ist.

3. Reinigungsvorrichtung nach einem der Ansprüche 1 bis 2,
**dadurch gekennzeichnet,**
**dass** in der Verteilereinrichtung (5, 13; 113a, 113b, 105; 213a, 213b, 232, 231, 230; 313a, 313b, 305; 413, 405) eine Pumpe (340) zum Pumpen der Abgase und/oder Abfallflüssigkeiten angeordnet ist.

4. Reinigungsvorrichtung nach einem der Ansprüche 1 bis 3,
**dadurch gekennzeichnet,**
**dass** zwischen der Verteilereinrichtung (5, 13; 113a, 113b, 105; 213a, 213b, 232, 231, 230; 313a, 313b, 305; 413, 405) und der Brennstoffzelleneinrichtung (2; 102; 202; 302; 402) eine Kondensoreinrichtung (120, 220, 320) zum Kondensieren der Abgase der Brennstoffzelle (2; 102; 202; 302; 402) angeordnet ist.

5. Reinigungsvorrichtung nach einem der Ansprüche 1 bis 4,
**dadurch gekennzeichnet,**
**dass** der rotierende Reinigungskörper (6, 15; 106, 115; 206, 215; 406, 415) über eine hohle Welle (114, 214) mit einem Maschinenkörper gekoppelt ist, die Brennstoffzelleneinrichtung (2; 102; 202; 302; 402) Bestandteil des Maschinenkörpers ist und die Verteilereinrichtung (5, 13; 113a, 113b, 105; 213a, 213b, 232, 231, 230; 313a, 313b, 305; 413, 405) zumindest teilweise in der hohlen Welle (114; 214) angeordnet ist.

6. Reinigungsvorrichtung nach einem der Ansprüche 1 bis 5,
**dadurch gekennzeichnet,**
**dass** in dem rotierenden Reinigungskörper (6, 15; 106, 115; 206, 215; 406, 415) ein Endstück der Verteilereinrichtung (5, 13; 113a, 113b, 105; 213a, 213b, 232, 231, 230; 313a, 313b, 305; 413, 405) eingebettet ist, welches Öffnungen zum Auslassen der Abgase und/oder der Abfallflüssigkeit aufweist.

7. Reinigungsvorrichtung nach einem der vorhergehenden Ansprüche,
**dadurch gekennzeichnet,**
**dass** ein Vorratsbehältnis (121; 221) zur Aufnahme von Brennstoff vorgesehen ist, das Vorratsbehältnis an dem Maschinenkörper angeordnet ist und dieser über eine Zuleitung (122; 222) mit der Brennstoffzelleneinrichtung (2; 102; 202; 302; 402) gekoppelt ist.

8. Reinigungsvorrichtung nach Anspruch 7,
**dadurch gekennzeichnet, dass** eine Halterungsvorrichtung (123; 223) zum lösbaren Einsetzen des Vorratsbehältnisses (121; 221) vorgesehen ist.

9. Reinigungsvorrichtung nach einem der vorhergehenden Ansprüche,
**dadurch gekennzeichnet,**
**dass** eine erste Achse (A) vorgesehen ist, welche senkrecht zu der zu reinigenden Oberfläche angeordnet ist und um welche sich mindestens einer der rotierenden Reinigungskörper (6, 15; 106, 115; 206, 215) dreht und/oder eine zweite Achse (B) vorgesehen ist, welche parallel zu der zu reinigenden Oberfläche angeordnet ist und um welche sich mindestens einer der rotierenden Reinigungskörper (406, 415) dreht.

10. Reinigungsvorrichtung nach einem der vorhergehenden Ansprüche,
**dadurch gekennzeichnet,**
**dass** eine Füllstandsanzeige (51) zum Anzeigen eines Füllstandes des Vorratsbehältnisses (121; 221) vorgesehen ist.

11. Reinigungsvorrichtung nach einem der Ansprüche 1 bis 10,
**dadurch gekennzeichnet,**
**dass** die Brennstoffzelleneinrichtung (2; 102; 202; 302; 402) und/oder das Verteilungssystem (5, 13; 113a, 113b, 105; 213a, 213b, 232, 231, 230; 313a, 313b, 305; 413, 405) von dem Maschinenkörper bzw. dem rotierenden Reinigungskörper (6, 15; 106, 115; 206, 215; 406, 415) lösbar angeordnet sind.

12. Reinigungsvorrichtung nach einem der vorhergehenden Ansprüche,
**dadurch gekennzeichnet,**
**dass** die Brennstoffzelleneinrichtung (2; 102; 202; 302; 402) eine alkalische Brennstoffzelle, eine Polymer-Elektrolyt-Membran-Brennstoffzelle, eine Festoxid-Brennstoffzelle, eine Direktmethanol-Brennstoffzelle, eine Phosphorsäure-Brennstoffzelle und/oder eine Schmelzkarbonatbrennstoffzelle beinhaltet.

## Claims

1. Cleaning apparatus,
with at least one rotating cleaning body (6, 15; 106, 115; 206, 215; 406, 415) for cleaning a surface, and
with a fuel cell device (2; 102; 202; 302; 402) which supplies the apparatus with electric energy,
**characterised in that**
a distribution device (5, 13; 113a, 113b, 105; 213a, 213b, 232, 230; 231, 313a, 313b, 305; 413, 405) is provided, which directs exhaust gases and/or waste liquids of the fuel cell device (2; 102; 202; 302; 402) to the at least one cleaning body (6, 15; 106, 115; 206, 215; 406, 415) and/or the surface.

2. Cleaning apparatus after claim 1,
**characterised in that**
the distribution device (5, 13; 113a, 113b, 105; 213a, 213b, 232, 231, 230; 313a, 313b, 305; 413, 405) comprises at least one nozzle (105, 305, 405) with a nozzle outlet, which is adjusted to point with its nozzle outlet to the at least one cleaning body (6, 15; 106, 115; 206, 215; 406, 415) and/or the cleaning surface.

3. Cleaning apparatus after one of the claims 1 to 2,
**characterised in that**
in the distribution device (5, 13; 113a, 113b, 105; 213a, 213b, 232, 231, 230; 313a, 313b, 305; 413, 405) a pump (340) for pumping the exhaust gases and/or the waste liquids is arranged.

4. Cleaning apparatus after one of the claims 1 to 3;
**characterised in that**
between the distribution device (5, 13; 113a, 113b, 105; 213a, 213b, 232, 231, 230; 313a, 313b, 305; 413, 405) and the fuel cell device (2; 102; 202; 302; 402) a condensing device (120, 220, 320) for condensing the exhaust gases of the fuel cell (2; 102; 202; 302; 402) is arranged.

5. Cleaning apparatus after one of the claims 1 to 4,
**characterised in that**
the rotating cleaning body (6, 15; 106, 115; 206, 215; 406, 415) is coupled by a hollow shaft (114, 214) with a machine body, the fuel cell device (2; 102; 202; 302; 402) is a component of the machine body and the distribution device (5, 13; 113a, 113b, 105; 213a, 213b, 232, 231, 230; 313a, 313b, 305; 413, 405) is at least partially arranged in the hollow shaft (114; 214).

6. Cleaning apparatus after one of the claims 1 to 5,
**characterised in that**
in the rotating cleaning body (6, 15; 106, 115; 206, 215; 406, 415) an end piece of the distribution device (5, 13; 113a, 113b, 105; 213a, 213b, 232, 231, 230; 313a, 313b, 305; 413, 405) is embedded which comprises orifices for letting out the exhaust gases and/or the waste liquid.

7. Cleaning apparatus after one of the preceding claims,
**characterised in that**
a storage container (121; 221) for containing fuel is provided, the storage container is arranged in the machine body and this is coupled with a supply (122; 222) with the fuel cell device (2; 102; 202; 302; 402).

8. Cleaning apparatus after claim 7,
**characterised in that**
a supporting device (123; 223) for solvable inserting the storage container (121; 221) is provided.

9. Cleaning apparatus after one of the preceding claims,
**characterised in that**
a first axis (A) is provided which is arranged vertically to the surface to be cleaned and around which at least one of the rotating cleaning bodies (6, 15; 106, 115; 206, 215) rotates and/or a second axis (B) is provided which is arranged in parallel to the surface to be cleaned and around which at least one of the rotating cleaning bodies (406, 415) rotates.

10. Cleaning apparatus after one of the preceding claims, **characterised in that** a filling level indicator (51) for displaying a filling level of the storage container (121; 221) is provided.

11. Cleaning apparatus after one of the claims 1 to 10,
**characterised in that**
the fuel cell device (2; 102; 202; 302; 402) and/or the distribution device (5, 13; 113a, 113b, 105; 213a, 213b, 232, 231, 230; 313a, 313b, 305; 413, 405) are solvably arranged to the machine body and/or to the rotating cleaning body (6, 15; 106, 115; 206, 215; 406, 415).

12. Cleaning apparatus after one of the preceding claims, **characterised in that**
the fuel cell device (2; 102; 202; 302; 402) comprises an alkaline fuel cell, a polymer electrolyte membrane fuel cell, a solid oxid fuel cell, a direct methanol fuel cell, a phosphorus acid fuel cell and/or a molten carbonate fuel cell.

## Revendications

1. Dispositif de nettoyage,
avec au moins un corps de nettoyage rotatif (6, 15 ; 106, 115 ; 206, 215 ; 406, 415) pour le nettoyage d'une surface et
avec une pile à combustible (2 ; 102 ; 202 ; 302 ; 402) qui alimente le dispositif en énergie électrique,
**caractérisé en ce qu'**il est prévu un dispositif distributeur (5, 13 ; 113a, 113b, 105 ; 213a, 213b, 232, 230 ; 231, 313a, 313b, 305 ; 413, 405) qui dirige des gaz d'échappement et/ou des déchets liquides de la pile à combustible (2 ; 102 ; 202 ; 302 ; 402) sur le ou les corps de nettoyage (6, 15 ; 106, 115 ; 206, 215 ; 406, 415) et/ou sur la surface.

2. Dispositif de nettoyage selon la revendication 1, **caractérisé en ce que** le dispositif distributeur (5, 13 ; 113a, 113b, 105 ; 213a, 213b, 232, 231, 230 ; 313a, 313b, 305 ; 413, 405) comporte au moins une buse (105, 305, 405) qui a une sortie de buse et qui est dirigée avec sa sortie de buse pointant sur le ou les corps de nettoyage (6, 15 ; 106, 115 ; 206, 215 ; 406, 415) et/ou sur la surface à nettoyer.

3. Dispositif de nettoyage selon l'une des revendications 1 à 2, **caractérisé en ce qu'**une pompe (340) est agencée dans le dispositif distributeur (5, 13 ; 113a, 113b, 105 ; 213a, 213b, 232, 231, 230 ; 313a, 313b, 305 ; 413, 405) pour pomper les gaz d'échappement et/ou les déchets liquides.

4. Dispositif de nettoyage selon l'une des revendications 1 à 3, **caractérisé en ce qu'**un dispositif condenseur (120, 220, 320) est agencé entre le dispositif distributeur (5, 13 ; 113a, 113b, 105 ; 213a, 213b, 232, 231, 230 ; 313a, 313b, 305 ; 413, 405) et la pile à combustible (2 ; 102 ; 202 ; 302 ; 402) pour condenser les gaz d'échappement de la pile à combustible (2 ; 102 ; 202 ; 302 ; 402).

5. Dispositif de nettoyage selon l'une des revendications 1 à 4, **caractérisé en ce que** le corps de nettoyage rotatif (6, 15 ; 106, 115 ; 206, 215 ; 406, 415) est couplé à un corps de machine par l'intermédiaire d'un arbre creux (114 ; 214), **en ce que** la pile à combustible (2 ; 102 ; 202 ; 302 ; 402) fait partie du corps de machine et **en ce que** le dispositif distributeur (5, 13 ; 113a, 113b, 105 ; 213a, 213b, 232, 231, 230 ; 313a, 313b, 305 ; 413, 405) est agencé au moins en partie dans l'arbre creux (114 ; 214).

6. Dispositif de nettoyage selon l'une des revendications 1 à 5, **caractérisé en ce qu'**une pièce terminale du dispositif distributeur (5, 13 ; 113a, 113b, 105 ; 213a, 213b, 232, 231, 230 ; 313a, 313b, 305 ; 413, 405) est intégrée dans le corps de nettoyage rotatif (6, 15 ; 106, 115 ; 206, 215 ; 406, 415) et comporte des orifices pour la sortie des gaz d'échappement et du déchet liquide.

7. Dispositif de nettoyage selon l'une des revendications précédentes, **caractérisé en ce qu'**un réservoir (121 ; 221) est prévu pour le stockage du combustible, **en ce que** le réservoir est agencé sur le corps de machine et **en ce que** ce dernier est couplé à la pile à combustible (2 ; 102 ; 202 ; 302 ; 402) par l'intermédiaire d'une conduite d'alimentation (122 ; 222).

8. Dispositif de nettoyage selon la revendication 7, **caractérisé en ce qu'**un dispositif de fixation (123 ; 223) est prévu pour le montage amovible du réservoir (121 ; 221).

9. Dispositif de nettoyage selon l'une des revendications précédentes, **caractérisé en ce qu'**il est prévu un premier axe (A) qui est agencé perpendiculairement à la surface à nettoyer et autour duquel au moins l'un des corps de nettoyage rotatifs (6, 15 ; 106, 115 ; 206, 215) tourne et/ou **en ce qu'**il est prévu un deuxième axe (B) qui est agencé parallèlement à la surface à nettoyer et autour duquel au moins l'un des corps de nettoyage rotatifs (406, 415) tourne.

10. Dispositif de nettoyage selon l'une des revendications précédentes, **caractérisé en ce qu'**un indicateur de niveau (51) est prévu pour indiquer le niveau du réservoir (121 ; 221).

11. Dispositif de nettoyage selon l'une des revendications 1 à 10, **caractérisé en ce que** la pile à combustible (2 ; 102 ; 202 ; 302 ; 402) et/ou le système distributeur (5, 13 ; 113a, 113b, 105 ; 213a, 213b, 232, 231, 230 ; 313a, 313b, 305 ; 413, 405) sont agencés de façon amovible par rapport au corps de machine ou au corps de nettoyage rotatif (6, 15 ; 106, 115 ; 206, 215 ; 406, 415).

12. Dispositif de nettoyage selon l'une des revendications précédentes, **caractérisé en ce que** la pile à combustible (2 ; 102 ; 202 ; 302 ; 402) est une cellule électrochimique alcaline, une cellule électrochimique à membrane polymère électrolytique, une cellule électrochimique à oxyde solide, une cellule électrochimique à méthanol direct, une cellule électrochimique à acide phosphorique et/ou une cellule électrochimique à carbonate fondu.
